# EUROPEAN PATENT SPECIFICATION

(11) **EP 3 671 890 B1**
(45) Date of publication and mention of the grant of the patent: **28.10.2020**
(21) Application number: 18214404.8
(22) Date of filing: 20.12.2018
(51) Int. Cl.: H01M 2/10, H01M 10/04, H01M 10/052

(54) **BATTERY PACK FOR A VEHICLE**
BATTERIEPACK FÜR EIN FAHRZEUG
BLOC-BATTERIE POUR VÉHICULE

(43) Date of publication of application: 24.06.2020
(73) Proprietor: Samsung SDI Co., Ltd., Gyeonggi-do 17084 (KR)
(72) Inventor: Golubkov, Andrej, 8010 Graz (AT)
(74) Representative: Gulde & Partner

(56) References cited:
- US-A1- 2011 177 366
- US-A1- 2012 308 859
- US-A1- 2017 229 748

## Description

### Field of the Invention

The present invention relates to a battery pack for a vehicle including a battery pack housing for accommodating components of the battery pack.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework as well as the cover plates fixed atop and below the battery modules are usually made of aluminum or an aluminum alloy to lower the total weight of the construction.

Battery packs according to the prior art, despite any modular structure, usually comprise a battery pack housing that serves as enclosure to seal the battery pack against the environment and provides structural protection of the battery pack's components. Housed battery packs are usually mounted as a whole into their application environment, e.g. an electric vehicle. Li-ion battery modules for EV's are placed inside the common battery pack housing. The cells of these battery modules are placed in a way such that their safety vents (or burst plate openings) face a cover of the battery pack housing.

In case of thermal runaway of a Li-ion cell a hot vent-gas jet originates at the burst plate of the cell and the vent-gas jet hits the cover of the housing. The distance between the vent and the cover may be less then 50 mm, in particular less than 20 mm and the vent-gas jet escapes from the vent with nearly speed of sound and a temperature of up to 1400 °C. The vent-gas jet may also include abrasive particles from inside the cell. Such a vent-gas jet may easily penetrate aluminum sheets, which are commonly used as low-cost light-weight material for manufacturing the cover.

US 9,537,130 B2 refers to battery packs for EVs including a number of battery modules. Single battery cells are assembled in a module such that their security vents face upwards. A heat-resistance member is provided between the battery cells and a cover body. The heat-resistance member covers the top surfaces of the battery cells, but has openings formed in regions corresponding to the battery cell vents. The heat-resistance member shall withstand a temperature of 100 to 1300 °C. The cover is formed of a resin and defines a gas flow path connected to the exhaust port. Further examples of battery packs have been described in US 2017/229748 A1, US 2012/308859 A1 and US 2011/177366 A1.

It is an object of the present invention to overcome or reduce at least some of the drawbacks of the prior art and to provide a battery pack that improves safety in case of thermal runaway of a Li-ion cell.

### Summary of Invention

Embodiments of the present disclosure seek to solve at least one of the problems existing in the prior art to at least some extent. In particular, a battery pack for a vehicle is provided comprising:
- a battery pack housing for accommodating components of the battery pack, the battery pack housing including a cover plate; and
- at least one battery module including a plurality of secondary battery cells, wherein each of the battery cells is placed in a cell case including a safety vent and wherein the safety vents of the battery cells are facing the cover plate of the battery pack housing.

According to the present invention, the cover plate is a laminate body including or consisting of a first layer made of aluminum or an aluminum alloy and a second layer made of an incombustible heat-resistant stainless steel having a melting point of at least 1400°C and having a thermal conductivity of equal to or less than 40 W/(m K). Further, the second layer is provided at an inner surface of the cover plate facing the safety vents of the battery cells and wherein a distance between the safety vents of the battery cells and the cover plate is 50 mm or less.

Thus, a general idea of the invention is to provide a cover plate for the housing of the battery pack that includes a laminate comprising a thicker outer aluminium sheet and a narrow inner layer of a heat-resistant material having a sufficient high melting point so as to avoid melting of the same in case of a thermal runaway of a secondary battery cell, in particular a lithium secondary battery cell. The inventive cover plate for the battery pack housing still includes an outer layer made of aluminum or an aluminum alloy so as to reduce the total weight of the battery pack and reduce material costs. However, the laminate further comprises an inner layer facing the safety vents of the secondary battery cells, specifically lithium secondary battery cells. The inner layer is made of an incombustible material, which will not melt when a vent-gas jet caused by a thermal runaway of a battery cell impacts on the cover plate.

A laminate in the sense of the present invention is a permanently assembled object by heat, pressure, welding, or adhesives. The cover plate is formed integrally of at least the first and second layer. Beside these layers and means for permanently assembling the same, the laminate may comprise further layers such as a lacquer coating on the outer surface of the cover plate. However, the second layer made of the incombustible material having a melting point of at least 1400°C constitutes always the innermost layer of the laminate. Preferably, the laminate only includes the first and second layer being permanently assembled together.

According to a preferred embodiment of the present invention, the second layer is made of a material having a thermal conductivity of equal to or less than 20 W/(m K). If a cell goes into thermal runaway, a hot vent-gas jet will escape from the burst-plate of the cell towards the inside layer of the cover plate. The gas may have temperatures up to 1400°C, and high speed. However, the duration of the venting event is quite short, usually less then 5 seconds. Although a high amount of heat will be transferred from the gas to the second layer of the cover plate at the point of impingement, the heat will not immediately transferred to the first layer of aluminum due to the low thermal conductivity of the material. Thereby, instant damage of the cover plate will be avoided. The deferred heat passing the second layer at the point of impingement will be transferred rapidly through the first layer due to the high thermal conductivity of the material.

Specifically, the second layer is made of a heat-resistant stainless steel. The heat-resistant stainless steel may be one of a ferritic stainless steel alloy such as X10CrAlSi7, X10CrAl13, X10CrAl18, and X18CrN28; an austenitic stainless steel alloy such as X15CrNiSi20-12, X15CrNiSi25-20, X15CrNiSi25-21, and X12CrNiTi18-10; or a nickel-chrome stainless steel alloy such as NiCr15Fe, NiCr23Fe, NiCr22Mo9Nb, NiCr21Mo, and NiCr28FeSiCe. A laminate including a layer of aluminum or aluminum alloy and a layer of such heat-resistant stainless steel can be prepared using common techniques like, for example, welding or gluing. Furthermore, heat-resistant stainless steel layers are commercially available and their chemical and mechanical properties may resist even the highly abrasive hot vent-gas jet in case of thermal runaway. In other words, the cover plate for the housing of the battery pack is preferably be made from a clad-metal sheet consisting of two layers: a fire-proof inside layer made from a (thin) stainless steel sheet and a low-cost outside layer made from a (thicker) aluminum or aluminum alloy sheet.

According to another embodiment of the present invention, the second layer may have a thickness of 30 µm to 200 µm, more preferably in the range 50 µm to 100 µm. If the thickness is less than 30 µm, the second layer may not sufficiently suppress instant heat transfer to the first layer in case of a thermal runaway. If the thickness is more than 300 µm, the weight of the second layer may be unnecessary high, especially in case of a layer made of heat-resistant stainless steel.

According to another embodiment of the present invention, the first layer may have a thickness of 0.5 mm to 5 mm, more preferably in the range of 1 mm to 3 mm. If the thickness is less than 0.5 mm, the first layer may be unable to sufficiently seal the battery pack against the environment and, at the same time, provide structural protection of the battery pack's components. If the thickness is more than 5 mm, the weight of the first layer may be unnecessary high. According to one embodiment of the present invention, both before mentioned preferred thickness ranges of the first layer and the second layer are combined. In particular, a total thickness of the cover plate is preferably in the range of 0.53 mm to 5.2 mm, more preferred in the range of 1 mm to 3 mm.

It is further preferred that a distance between the safety vents of the battery cells and the cover plate is 20 mm or less. Due to the presence of the inventive second layer, the required installation space for the secondary battery cells within the battery pack can be minimized without increasing damage risks in case of thermal runaway of battery cells.

According to another aspect of the present invention, a vehicle including a battery module as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a lithium secondary battery cell according to an exemplary embodiment;
- Fig. 2: illustrates a partial perspective view of a battery module including a plurality of the battery cells of Fig.1;
- Fig. 3: illustrates a schematic perspective view on a battery pack including two of the battery modules of Fig. 2 being assembled in a common battery pack housing and including a cover plate according to an embodiment of the present invention;
- Fig. 4: illustrates a partial sectional view through the cover plate illustrated in Fig. 3; and
- Fig. 5: illustrates a schematic perspective view on a vehicle including an exemplary battery pack.

### Detailed Description of the Invention

Features of the inventive concept and method of accomplishing the same may be understood more readily by reference to the following detailed description of an embodiment and the accompanying drawings. The present invention, however, may be embodied in various different forms, and should not be construed as being limited to only the illustrated embodiment herein. Rather, this embodiment is provided as examples so that this disclosure will be thorough and complete, and will fully convey the aspects and features of the present invention to those skilled in the art. Unless otherwise noted, like reference numerals denote like elements throughout the attached drawings and the written description, and thus, descriptions thereof will not be repeated. In the drawings, the relative sizes of elements, layers, and regions may be exaggerated for clarity.

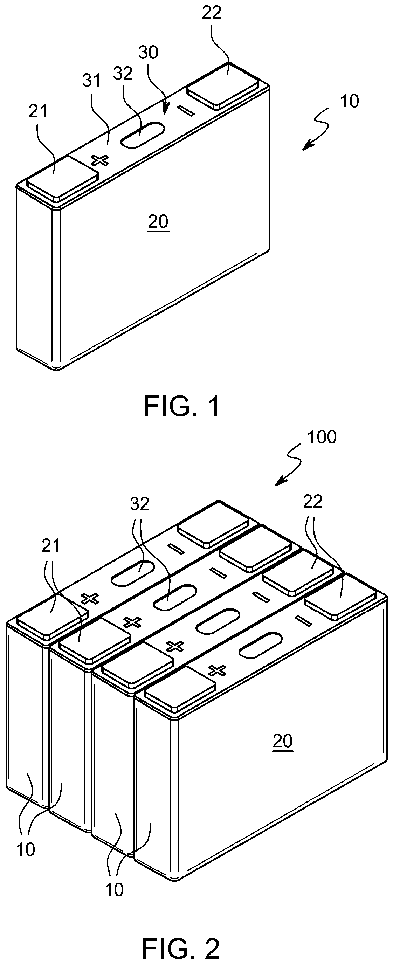

Fig. 1 is a perspective view illustrating a secondary battery cell 10 according to an exemplary embodiment, more specifically a lithium secondary battery cell. As shown in Fig. 1, the battery cell 10 includes a case 20 for accommodating an electrode assembly and an electrolyte. The battery cell 10 also includes a cap assembly 30 for sealing an opening of the case 20. The battery cell 10 according to the exemplary embodiment is a lithium ion secondary battery and is described as a non-limiting example configured to have a prismatic shape. The electrode assembly is accommodated in the case 20 together with the electrolyte. The electrolyte may be made of a lithium salt, such as LiPF₆ or LiBF₄, with an organic solvent, such as EC, PC, DEC, EMC, or EMC. The electrolyte may be in a liquid, solid, or gel state. The case 20 may be formed of a metal, such as aluminum.

According to the illustrated exemplary embodiment, the cap assembly 30 includes a cap plate 31 for covering the opening of the case 20 by being bonded to the case 20, and includes a positive terminal 21 and a negative terminal 22, which are externally protruded from the cap plate 31 to be electrically connected to a positive electrode and a negative electrode of the electrode assembly, respectively. The cap assembly 30 further includes a safety vent 32, which is opened due to a predetermined pressure in case of a thermal runaway.

Referring to Fig. 2, a number of battery cells 10 is assembled to form a battery module 100. Within the assembly all the safety vents 32 of the battery cells 10 are facing into the same direction.

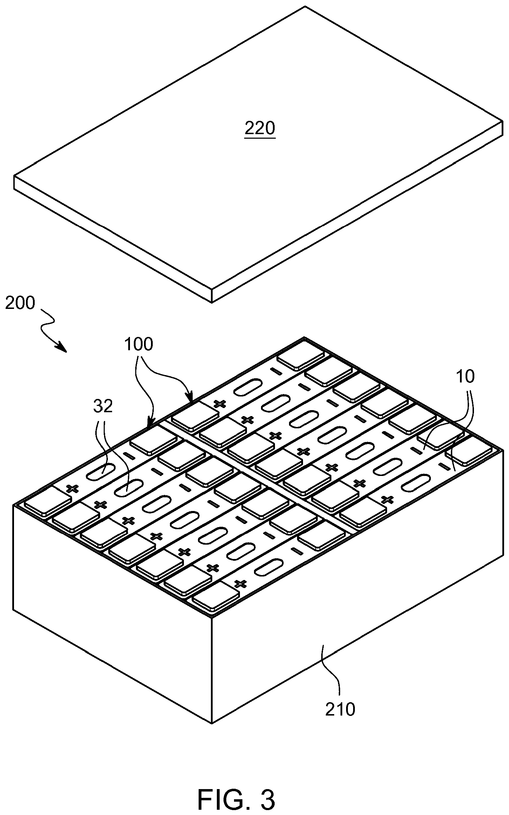

Fig. 3 illustrates a schematic perspective view on an exemplary battery pack 200 including two of the battery modules 100 illustrated in part in Fig. 2. The battery modules 100 are assembled in a common housing 210 such that the safety vents 32 face upwards. The battery pack housing 210 further includes a cover plate 220 for closing an opening of the battery pack housing 210 such the battery modules 100 are sealed against the environment. The closed battery pack housing 210 may encompass further components of the battery pack 200, e.g. means for active cooling the battery modules 100, and a battery management system for charge and discharge the battery cells 10. When the cover plate 220 is placed on the battery pack housing 210, the safety vents 32 of the battery cells 10 directly face an inner surface of the cover plate 220.

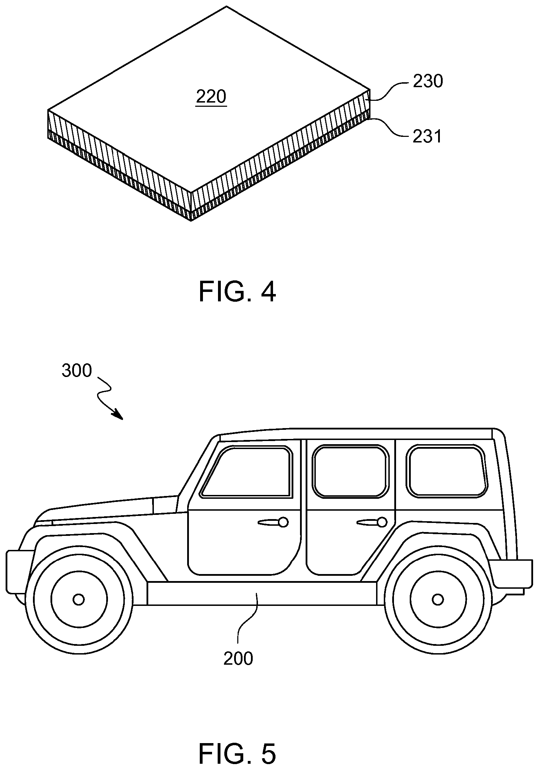

Fig. 4 illustrates a partial sectional view of the cover plate 220 which may be used in the exemplary embodiment illustrated in Fig. 3. The cover plate 220 according to the exemplary embodiment is a laminate body consisting of a first layer 230 and a second layer 231.

The first layer 230 is made of aluminum or an aluminum alloy, whereas the second layer 231 is made of heat-resistant stainless steel, for example, an austenitic stainless steel alloy such as X15CrNiSi20-12. According to the exemplary embodiment, the first layer 230 has a thickness of 2 mm and the second layer 231 has a thickness of 100 µm.

When the cover plate 220 is placed on the battery pack housing 210, the second layer 231 directly faces the safety vents 32 of the battery cells 10. A distance between the second layer 231 and the safety vents 32 may be, for example, only 20 mm. In case of a thermal runaway, a hot vent-gas jet will escape from the safety vents 32 of the battery cells 10 towards the second layer 231. The gas may have temperatures up to 1400°C, and high speed. However, the second layer 231 is made of incombustible material, here a heat-resistant stainless steel, having a melting point of more than 1400°C and a thermal conductivity of less than 40 W/(m·K). Although a high amount of heat will be transferred from the gas to the second layer 231 of the cover plate 220 at the point of impingement, the heat will not immediately transferred to the first layer 230 of aluminum due to the low thermal conductivity of the material. Thereby, instant damage of the cover plate 220 will be avoided.

Fig. 5 schematically illustrates a vehicle 300 including, for example, the battery pack 200 of Fig. 3, which is mounted to the vehicles chassis frame.

### Reference signs

- 10: secondary battery cell
- 20: case
- 21: positive terminal
- 22: negative terminal
- 30: cap assembly
- 31: cap plate
- 32: safety vent
- 100: battery module
- 200: battery pack
- 210: battery pack housing
- 220: cover plate
- 230: first layer
- 231: second layer
- 300: vehicle

## Claims

1. A battery pack (200) for a vehicle (300), comprising:
- a battery pack housing (210) for accommodating components of the battery pack (200), the battery pack housing (210) including a cover plate (220); and
- at least one battery module (100) including a plurality of secondary battery cells (10), wherein each of the battery cells (10) is placed in a cell case (20) including a safety vent (32) and wherein the safety vents (32) of the battery cells (10) are facing the cover plate (220) of the battery pack housing (210);
wherein the cover plate (220) is a laminate body including a first layer (230) made of aluminum or an aluminum alloy and a second layer (231) made of an incombustible material having a melting point of at least 1400°C, and wherein the second layer (231) is provided at an inner surface of the cover plate (220) facing the safety vents (32) of the battery cells (10), wherein the second layer (231) is made of a heat-resistant stainless steel having a thermal conductivity of equal to or less than 40 W/(m K); and wherein a distance between the safety vents (32) of the battery cells (10) and the cover plate (220) is 50 mm or less.

2. The battery pack of claim 1, wherein the heat-resistant stainless steel is one of a ferritic stainless steel alloy, an austenitic stainless steel alloy, or a nickel-chrome stainless steel alloy.

3. The battery pack of any one of the preceding claims, wherein the second layer (231) has a thickness of 30 µm to 200 µm.

4. The battery pack of any one of the preceding claims, wherein the first layer (230) has a thickness of 0.5 mm to 5 mm.

5. The battery pack of any one of the preceding claims, wherein the secondary battery cell (10) is a lithium secondary battery cell.

6. A vehicle (300) including a battery pack (200) according to any one of the preceding claims.

## Patentansprüche

1. Batteriepack (200) für ein Fahrzeug (300), umfassend:
- ein Batteriepack-Gehäuse (210) zum Aufnehmen von Komponenten des Batteriepacks (200), wobei das Batteriepack-Gehäuse (210) eine Abdeckplatte (220) aufweist; und
- mindestens ein Batteriemodul (100) mit einer Vielzahl von Sekundärbatteriezellen (10), wobei jede der Batteriezellen (10) in einem Zellengehäuse (20) mit einem Sicherheitsventil (32) angeordnet ist und wobei die Sicherheitsventile (32) der Batteriezellen (10) der Deckplatte (220) des Batteriepack-Gehäuses (210) zugewandt sind;
wobei die Deckplatte (220) ein Laminatkörper ist, der eine erste Schicht (230) aus Aluminium oder einer Aluminiumlegierung und eine zweite Schicht (231) aus einem nicht brennbaren Material mit einem Schmelzpunkt von mindestens 1400°C aufweist, und wobei die zweite Schicht (231) an einer Innenfläche der Deckplatte (220) vorgesehen ist, die den Sicherheitsventilen (32) der Batteriezellen (10) zugewandt ist, wobei die zweite Schicht (231) aus einem hitzebeständigen rostfreien Stahl mit einer Wärmeleitfähigkeit von gleich oder weniger als 40 W/(m K) hergestellt ist; und wobei ein Abstand zwischen den Sicherheitsventilen (32) der Batteriezellen (10) und der Abdeckplatte (220) 50 mm oder weniger beträgt.

2. Batteriepack nach Anspruch 1, wobei der hitzebeständige rostfreie Stahl aus einer ferritischen rostfreien Stahllegierung, einer austenitischen rostfreien Stahllegierung oder einer Nickel-Chrom-Edelstahllegierung besteht.

3. Batteriepaket nach einem der vorhergehenden Ansprüche, wobei die zweite Schicht (231) eine Dicke von 30 µm bis 200 µm aufweist.

4. Batteriepack nach einem der vorhergehenden Ansprüche, wobei die erste Schicht (230) eine Dicke von 0,5 mm bis 5 mm aufweist.

5. Batteriepack nach einem der vorhergehenden Ansprüche, wobei die Sekundärbatteriezelle (10) eine Lithium-Sekundärbatteriezelle ist.

6. Fahrzeug (300) mit einem Batteriepack (200) nach einem der vorhergehenden Ansprüche.

## Revendications

1. Bloc-batterie (200) pour un véhicule (300) comprenant :
un boîtier de bloc-batterie (210) pour loger des composants du bloc-batterie (200), le boîtier de bloc-batterie (210) comprenant une plaque de couvercle (220) ; et
au moins un module de batterie (100) comprenant une pluralité d'éléments de batterie secondaires (10), dans lequel chacun des éléments de batterie (10) est placé dans un boîtier d'élément (20) comprenant un évent de sécurité (32) et dans lequel les évents de sécurité (32) des éléments de batterie (10) font face à la plaque de couvercle (220) du boîtier de bloc-batterie (210) ;
dans lequel la plaque de couvercle (220) est un corps stratifié comprenant une première couche (230) réalisée à partir d'aluminium ou d'un alliage d'aluminium et une seconde couche (231) réalisée avec un matériau incombustible ayant un point de fusion d'au moins 1400°C, et dans lequel la seconde couche (231) est prévue au niveau d'une surface interne de la plaque de couvercle (220) faisant face aux évents de sécurité (32) des éléments de batterie (10), dans lequel la seconde couche (231) est réalisée avec un acier inoxydable thermorésistant ayant une conductivité thermique égale ou inférieure à 40 W/(m.K) ; et dans lequel une distance entre les évents de sécurité (32) des éléments de batterie (10) et la plaque de couvercle (220) est de 50 mm ou moins.

2. Bloc-batterie selon la revendication 1, dans lequel l'acier inoxydable thermorésistant est l'un parmi un alliage d'acier inoxydable ferritique, un alliage d'acier inoxydable austénitique ou un alliage d'acier inoxydable de nickel-chrome.

3. Bloc-batterie selon l'une quelconque des revendications précédentes, dans lequel la seconde couche (231) a une épaisseur de 30 µm à 200 µm.

4. Bloc-batterie selon l'une quelconque des revendications précédentes, dans lequel la première couche (230) a une épaisseur de 0,5 mm à 5 mm.

5. Bloc-batterie selon l'une quelconque des revendications précédentes, dans lequel l'élément de batterie secondaire (10) est un élément de batterie secondaire au lithium.

6. Véhicule (300) comprenant un bloc-batterie (200) selon l'une quelconque des revendications précédentes.
